**Europäisches Patentamt**

**European Patent Office**

**Office européen des brevets**

(19)

(11) Veröffentlichungsnummer: **0 197 353**

**A1**

(12)

# EUROPÄISCHE PATENTANMELDUNG

(21) Anmeldenummer: **86103431.2**

(22) Anmeldetag: **14.03.86**

(51) Int. Cl.⁴: **B 27 B 11/00**

(30) Priorität: **04.04.85 DE 3512395**

(43) Veröffentlichungstag der Anmeldung:
**15.10.86 Patentblatt 86/42**

(84) Benannte Vertragsstaaten:
**AT BE FR LU NL SE**

(71) Anmelder: **Maschinenfabrik Esterer Aktiengesellschaft**
**Estererstrasse 12**
**D-8262 Altötting(DE)**

(72) Erfinder: **Prechtl, August, Dipl.-Ing. (FH)**
**Mühlenstrasse 1**
**D-8263 Burghausen(DE)**

(72) Erfinder: **Betram, Dieter**
**Karl Valentinstrasse 12**
**D-8265 Neuötting 1(DE)**

(74) Vertreter: **Hieke, Kurt**
**Stadlerstrasse 3**
**D-8013 Haar bei München(DE)**

(54) **Verfahren und Vorrichtung zum Aussondern von im Transport auf einem Querförderer befindlichem, noch unbesäumtem, nicht nutzbarem Schnittholz.**

(57) Die Erfindung betrifft ein Verfahren und eine Vorrichtung zum Aussondern von im Transport auf einem Querförderer befindlichem, noch unbesäumtem Schnittholz (6) in Form von Brettern, Schwarten oder Abschnitten hiervon auf dem Wege von der Sägestation zu einer Bearbeitungsstation für das nutzbare Schnittholz. Im Stande der Technik wird diese Aussonderung mindestens unter Beteiligung eines Bedienungsmannes durchgeführt. Dadurch ist die Transportgeschwindigkeit sehr begrenzt. Nach dem erfindungsgemäßen Verfahren und mit der erfindungsgemäßen Vorrichtung ist eine vollständige Mechanisierung dieser Aussonderung möglich. Erreicht wird dies dadurch, daß die Querschnittsform der einzelnen Schnitthölzer (6) an einer Vielzahl von im gegenseitigen Abstand über deren Länge verteilten Stellen (4) festgestellt und abhängig von den ermittelten Querschnittsformen selektiv Trennschnitte (8) vorgenommen werden, die im wesentlichen in der Flucht der einzelnen Abtasteinrichtungen (4) selektiv angebracht werden können. Ebenfalls abhängig von den ermittelten Querschnittsformen können ganze Schnitthölzer (6) oder ausgewählte und von dem restlichen Holz getrennte Abschnitte im Bedarfsfalle von dem Querförderer (1) weg ausgesondert werden.

./...

Fig. 1

Haar, den 14. März 1986

Maschinenfabrik Esterer AG
8262 Altötting /Obb.

Mein Zeichen: M 348 /EP

B e s c h r e i b u n g

Verfahren und Vorrichtung zum Aussondern von im
Transport auf einem Querförderer befindlichem, noch
unbesäumtem, nicht nutzbarem Schnittholz

Die Erfindung bezieht sich auf ein Verfahren gemäß dem
Oberbegriff des Patentanspruchs 1 und eine Vorrichtung zum
Durchführen dieses Verfahrens.

Bisher wurde für eine weitere Nutzung unbrauchbares, unbesäumtes Schnittholz in Form von Brettern, Schwarten oder
Abschnitten hiervon während des Transportes auf einem Querförderer von der Schnittstation zu einer nachfolgenden
Bearbeitungsstation für das nutzbare Schnittgut weitgehend
händisch von einem Bedienungsmann ausgesondert. Dem Bedienungsmann standen bisher lediglich Hilfsmittel zur Erleichterung der Arbeit zur Verfügung. Zu den bekannten
Hilfsmitteln gehören zwei im gegenseitigen Abstand in
Längsrichtung des Holzes im Bereich des Querförderers angeordnete, selektiv in Betrieb setzbare Kappsägen, vor
denen der Bedienungsmann das im Transport befindliche Holz
so ausrichtet, daß unbrauchbare endseitige Störschwarten,
die für die nachfolgende Arbeitsstation gefährlich sind,
abgetrennt werden, wenn das Brett bzw. die Schwarte die
selektiv in die Holzbewegungsbahn verlagerbare Kreissäge
durchläuft. Die Verwendung zweier im gegenseitigen Abstand

-2-

in Holzlängsrichtung angeordneter Kreissägen brachte für den Bedienungsmann lediglich den Vorteil, daß er das Holz nicht Ende gegen Ende zu wenden brauchte, wenn an beiden Enden Störschwarten vorhanden waren, sondern daß er die Abtrennung durch einfaches Längsverschieben des Holzes auf dem Querförderer bewerkstelligen konnte.

Es ist auch bekannt, den beiden Kreissägen Weichen im Querförderer zuzuordnen, die den Bedienungsmann von der händischen Aussonderung der abgetrennten Störschwarten befreien.

Die bekannten Hilfsmittel für den Bedienungsmann erleichterten diesem zwar die Arbeit , machten ihn aber nicht entbehrlich. Die naturgemäß begrenzte Arbeitskapazität eines Bedienungsmannes erlaubt nur eine geringe Transportgeschwindigkeit mit entsprechend geringer Transportkapazität.

Der Erfindung liegt die Aufgabe zugrunde, ein Verfahren für den im Oberbegriff des Patentanspruchs 1 angegebenen Zweck zu schaffen, das eine vollständig mechanisierte Aussonderung und damit eine hohe Transportkapazität des Holzquertransportes von der Sägestation zur Nutzholz-Bearbeitungsstation ermöglicht.

Die vorstehende Aufgabe wird durch die im Kennzeichnungsteil des Patentanspruchs 1 genannten Merkmale gelöst. Die Ermittlung der Querschnittsformen der einzelnen Hölzer an den Abtastlinien läßt eine überaus detaillierte und differenzierte Bewertung der einzelnen Hölzer und Holzabschnitte hinsichtlich ihrer weiteren Verwertbarkeit einerseits und hinsichtlich einer eventuellen Gefährlichkeit für die nachfolgenden Arbeitsstationen andererseits zu, wobei diesbezügliche Kriterien in die Auswerteinrichtung leicht in bekannter Weise ein-

0197353

gebbar sind und damit eine hohe Flexibilität bei der Holzbewertung gegeben ist. Die Zuordnung je einer Kappvorrichtung in der Flucht der Abtasteinrichtungen und einer Vielzahl von über die Holzlänge verteilten Weichen hinter den Kappvorrichtungen erlaubt es, im Anschluß an die Abtastung in einer verhältnismäßig feinen Längenabstufung Holzabschnitte, die sich anhand der an ihnen im Abstand festgestellten Querschnittsformen als nutzbar dargestellt haben, von Holzabschnitten zu trennen, die den abgetasteten Querschnittsformen zufolge unbrauchbar oder gar gefährlich sind, und die letzteren ohne Gefährdung des Weitertransportes der brauchbaren Holzabschnitte sicher von dem Querförderer weg auch ohne jegliches Mitwirken eines Bedienungsmannes auszusondern.

Die vollständige Mechanisierbarkeit des erfindungsgemäßen Verfahrens ermöglicht eine hohe Arbeitskapazität des Querförderers und damit einen hohen Ausnutzungsgrad der nachfolgenden Bearbeitungsmaschinen.

Die Maßnahme gemäß Patentanspruch 2 dient der weiteren Steigerung der Arbeitsgeschwindigkeit des Querförderers, weil in diesem Falle mit dem Einstellen der Sägevorrichtungen für ein nächstes, mit Trennschnitten zu versehendes Holz nicht erst gewartet werden muß, bis das vorhergehende,im ganzen auszuscheidende Schnittholz die Sägevorrichtungen passiert hat.

Die Ermittlung der Querschnittsformen an den Schnitthölzern bietet auch die Möglichkeit für ein leichtes Erkennen,ob die jeweiligen Schnitthölzer mit der schmalen oder mit der breiten Schnittseite auf dem Querförderer aufliegen. Meistens ist es geboten, daß die Nutzhölzer hinsichtlich der relativen Breiten der Schnittflächen in einer vorgegebenen Orientierung in der nachfolgenden Bearbeitungsmaschine bearbeitet werden. Die Maßnahme gemäß Anspruch 3 ermöglicht es, unter Zuhilfenahme der Abtasteinrichtungen und der Auswerteinrichtung den einzelnen Hölzern bereits auf dem Querförderer auch diese Orientierung zu geben, sofern sie in der falschen Orient_ierung auf den Querförderer aufgelegt worden sind.

Vorzugsweise wird das Wenden gemäß Anspruch 4 hinter den in Transportrichtung letzten Aussonderungsstationen vorgenommen.

Der Anspruch 5 kennzeichnet als Hauptanspruch die erfindungsgemäße Vorrichtung zum Durchführen des erfindungsgemäßen Verfahrens. Die Unteransprüche 6 bis 8 betreffen bevorzugte Ausführungen der Vorrichtung gemäß Anspruch 5.

Die Erfindung wird nachstehend anhand der Zeichnung an einem Ausführungsbeispiel näher erläutert.

In der Zeichnung zeigt:

Fig. 1    eine nach dem erfindungsgemäßen Verfahren arbeitende erfindungsgemäße Vorrichtung in schematischer Darstellung von der Seite gesehen, und

Fig. 2    die Vorrichtung nach Fig. 1 in Ansicht von oben.

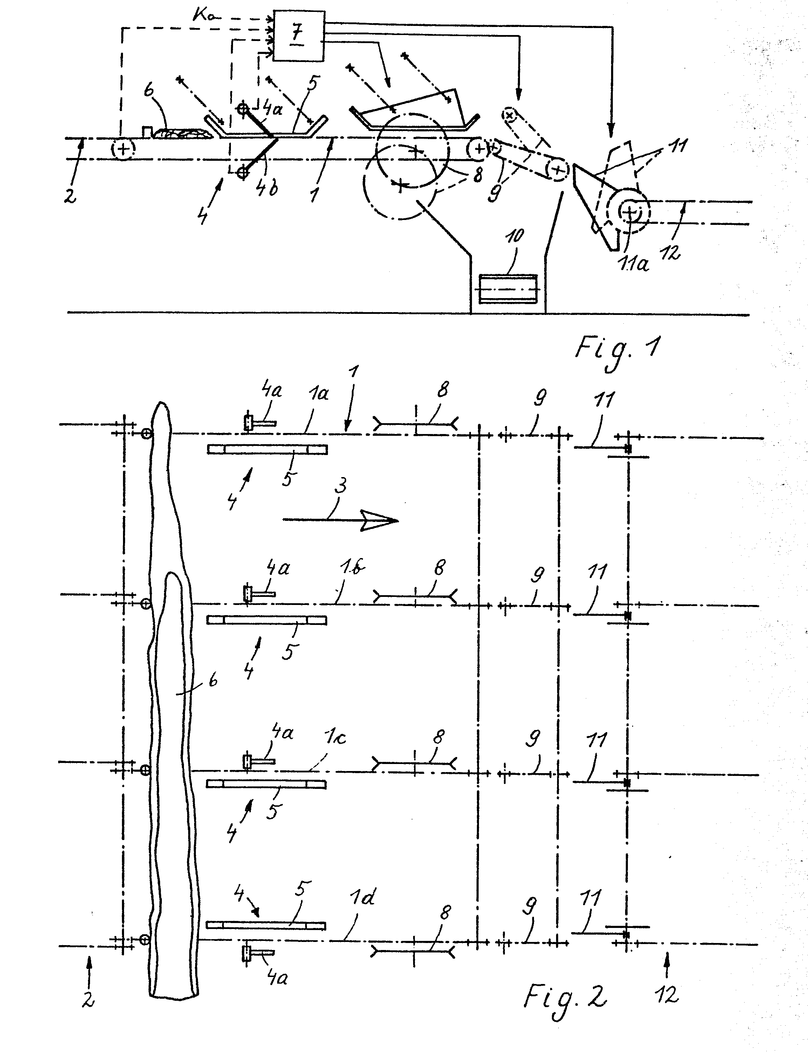

Die Vorrichtung nach Fig. 1 und 2 weist einen hier aus vier endlosen , zueinander parallelen Zügen 1a, 1b, 1c und 1d bestehenden Querförderer 1 auf, auf den die vereinzelten Schnitthölzer in Form von/Brettern mit oder ohne Schwartenabschnitte oder von reinen Schwarten von einem Zubring-Querförderer 2 aufgegeben werden.        /waldkantigen

Unabhängig davon, ob es sich bei dem Schnittholz um ein durchgehendes Brett mit sich über seine Länge hinweg erstreckenden beiderseitigen Schnittflächen, ein Brett mit
Schwartenabschnitten oder eine reine Schwarte mit Schnittfläche nur auf einer Seite handelt, kann jedes dieser
Schnitthölzer je nach den an seine Nutzbarkeit zu stellenden Kriterien für die Weiterverarbeitung an einer nachfolgenden Bearbeitungsmaschine brauchbare und unbrauchbare
Abschnitte aufweisen oder im ganzen brauchbar oder unbrauchbar sein.

Jedem der vier endlosen Züge 1a, 1b, 1c und 1d, auf denen
die Schnitthölzer in Anlage an nachfolgenden Mitnehmern im
wesentlichen senkrecht zur Transportrichtung gemäß Pfeil
3 transportiert werden, ist eine Abtastvorrichtung 4 zugeordnet, die mit oben und unten (Fig. 1) an den einzelnen
Schnitthölzern angreifenden Tastern 4a bzw. 4b sowie mit
einer Andruckschwinge 5 ausgerüstet ist, die die einzelnen
Schnitthölzer 6 von oben auf den Querförderer 1 drückt,
so daß diese verwindungsfrei darauf aufliegen.

Die Abtaster 4a und 4b messen kontinuierlich den Abstand,
den die von ihnen abgetastete Holzoberfläche im Durchlauf
an ihnen vorbei von einer zur Auflageebene des Querförderers 1 parallelen maschinenfesten Bezugsebene hat. Die
maschinenfeste Bezugsebene ist durch die Ruhestellung der
Taster 4a und 4b festgelegt. In der Ruhestellung ragen
beide Taster 4a und 4b in die Bewegungsbahn der Schnitthölzer 6 vor.

Sobald ein Schnittholz 6 von der aus Fig. 1 und 2 ersichtlichen Form zwischen die Abtaster 4a und 4b geschoben wird,
werden diese entsprechend dem Oberflächenverlauf eingestellt, wobei die unteren Abtaster 4b über die ganze Brettbreite hinweg einen konstanten Abstand ermitteln, während
die oberen Abtaster 4a bei denjenigen Abtasteinrichtungen, die sich im Bereich des Brettabschnittes befinden, der beidseitig Schnittflächen aufweist, am voreilenden und am nacheilenden Schnittholzende jeweils einen veränderlichen Abstand und dazwischen einen konstanten Abstand messen. Demgegenüber stellt der Abtaster 4a der in Fig. 2 obersten Abtasteinrichtung 4 einen mit fortschreitendem Transport kontinuierlich veränderlichen Abstand fest, während der untere Abtaster 4b dieser Abtasteinrichtung ebenso , wie die anderen unteren Abtaster 4b, einen gleichbleibenden Abstand ermittelt. Die von den oberen Abtastern 4a und den unteren Abtastern 4b ermittelten Abstände ergeben in Abhängigkeit vom Vorschub die Querschnittsform des Schnittholzes 6 entlang der zur Transportrichtung parallelen jeweiligen Abtastlinie. Diese wird durch eine Auswerteinrichtung 7 ermittelt und bewertet, in die die Abstandssignale von den Tastern 4a und 4b , ein vom Querförderer abgeleitetes, vorschubproportionales Signal und Kriterien K für die Bewertung eingegeben werden, wie dies die gestrichelten Linienzüge  in Fig. 1 andeuten.

Hinter den Abtasteinrichtungen 4 ist jeweils im wesentlichen in deren Flucht  eine Kappsäge 8 angeordnet. Die Kreissägen 8 sind zwischen einer Stellung, in der sie sich außerhalb der Bewegungsbahn der Schnitthölzer 6 befinden, und einer Stellung, in der sie in die Bewegungsbahn vorragen und einen Trennschnitt zu legen vermögen, unter der Steuerung durch die Auswerteinrichtung 7 verstellbar. Die Auswerteinrichtung 7 liefert die Positionierungssignale nach dem von den eingegebenen Kriterien K abhängigen Ergebnis der Bewertung der von ihr aus dem Vorschubsignal und den Abstandssignalen der Abtaster 4a und 4b ermittelten jeweiligen Querschnittsformen an den einzelnen Abtaststellen. Bei der dargestellten Form des Schnittholzes würde die Bewertung ergeben, daß die in Fig. 2 von oben zweite Kreissäge 8 in Schnittposition gebracht werden muß, so daß dann an dieser Stelle an dem Schnittholz 6 ein Trennschnitt gelegt würde.

Der Einfachheit halber sind in der Zeichnung die einzelnen Züge 1a - 1d des Querförderers 1 einspurig dargestellt, während sie in Wirklichkeit aus zwei Spuren bestehen, von denen sich die eine auf der einen und die andere auf der anderen Seite der jeweiligen Kreissäge 8 befindet, so daß die durch einen Trennschnitt getrennten Abschnitte beiderseits des Trennnschnittes von einer Zugspur unterstützt bleiben.

Unmittelbar hinter den Kreissägen 8 befinden sich im Anschluß an den Querförderer 1 verstellbare, in Wirklichkeit ebenfalls zweispurige Weichenzüge 9, die unter der Steuerung der Auswerteinrichtung 7 zwischen einer Position, in der sie die Züge 1a - 1d des Querförderers fortsetzen, und einer Position, in der sie im Anschluß an diese Züge des Querförderers 1 eine Lücke in der Transportbahn schaffen, verstellbar sind. Die Verstellbarkeit betrifft in diesem Falle die einzelnen Spuren, d.h., daß es möglich ist, eine der beiden Spuren einer jeden Weiche 9 unabhängig von der anderen in die eine oder andere Position zu bringen. Im dargestellten Falle würde die Auswerteinrichtung 7 die in Fig. 2 oberste Weiche 9 und die obere Spur der darunter befindlichen Weiche 9 in die Lücken- Stellung bringen und die andere Spur der letztgenannten Weiche sowie die darunter befindlichen Weichen 9 in der Stellung belassen, in der sie die Transportbahn fortsetzen. Dies hätte zur Folge, daß der in Fig. 2 oben befindliche, ersichtlich unbrauchbare und wegen seines offensichtlich sehr dünnen Auslaufes für die nachfolgende Bearbeitungsmaschine, beispielsweise einen Doppelbesäumer mit Richtvorrichtung, gefährliche Schwartenabschnitt, der vorher durch den Kappschnitt vom guten Brettabschnitt getrennt wurde, am Ende des Querförderers 1 nach unten auf einen Längsförderer 10 fällt, der ihn abtransportiert, während der gute Brettabschnitt über den Längsförderer 10 hinweg weitergeleitet wird. Er gelangt dann über eine in der Zeichnung nur schematisch angedeutete Wendevorrichtung 11, die ihn abhängig von Steuersignalen der Auswerteinrichtung 7 entweder vor dem Weitertransport auf einem anschließenden Querförderer 12 um seine Längsachse wendet oder ungewendet über sich hinweg gleiten läßt. Im dargestellten Falle würde die Wendeeinrichtung 11 außer Tätigkeit bleiben, d.h. den guten Brettabschnitt ungewendet passieren lassen, weil er in richtiger Lage mit der schmalen Schnittseite nach oben auf den Zubringförderer 2 aufgelegt worden ist, was die Auswerteinrichtung 7 anhand der an sie gelieferten Abstandssignale feststellen konnte.

Das Wenden von Schnitthölzern oder Schnittholzabschnitten besorgt die Wendevorrichtung 11 mit ihren einzelnen, in der Flucht der Kreissägen 8 liegenden Armen durch rasches Hochschwenken um die Drehachse 11a, wobei das darauf befindliche Schnittgut erst hochkant gestellt wird und dann zur anderen Seite auf den Querförderer 12 kippt.

Die Abtaster 4a und 4b der Abtasteinrichtung 4 sind Schwenkarme, die mit ihren vorderen Enden von oben (4a) bzw. von unten (4b) her an dem sich zwischen ihnen in Auflage auf dem Querförderer 1 hindurchbewegenden Schnittholz 6 angreifen, so daß ihre Winkelstellung von dem Abstand abhängig ist, den der jeweils gerade abgetastete Oberflächenpunkt von der maschinenfesten Bezugsebene, z.B. der Auflageebene des Querförderers 1 , aufweist. Über die Schnittflächen des Holzes hinweg bleibt die Winkelstellung der Abtaster 4a und 4b konstant und hat eine dem Abstand der jeweiligen Schnittfläche von der Bezugsebene und damit der Brettdicke entsprechende Größe, während sie sich beim Überstreichen der Waldkanten und der Schwartenoberflächen in der Neigungsbzw. Krümmungsänderung entsprechender Weise verändert. Die von den Abtasteinrichtungen 4 kontinuierlich an die Auswerteinrichtung 7 gelieferten Signale entsprechen jeweils der augenblicklichen Winkelstellung der Abtaster 4a und 4b.

Haar, den 14. März 1985 **0197353**

Maschinenfabrik Esterer AG
8262 Altötting /Obb.

Mein Zeichen: M 348/EP

P a t e n t a n s p r ü c h e

1. Verfahren zum Aussondern von im Transport auf einem Querförderer befindlichem, noch unbesäumten Schnittholz (Bretter, Schwarten oder Abschnitte hiervon) auf dem Weg von der Sägestation zu einer Bearbeitungsstation für das nutzbare Schnittholz, d a d u r c h gekennzeichnet, daß in räumlicher Aufeinanderfolge in der Transportrichtung der Schnitthölzer (6)

a) an einer Vielzahl von über die maximale Länge der Schnitthölzer (6) im gegenseitigen Abstand verteilten Abtaststellen an den durchlaufenden Schnitthölzern (6) jeweils die Querschnittsformen ermittelt werden, die die einzelnen Schnitthölzer (6) entlang den Abtastlinien aufweisen,

b) abhängig von den ermittelten Querschnittsformen im wesentlichen in der Flucht hinter den Abtaststellen selektiv Kappschnitte zur Trennung brauchbarer Schnittholzabschnitte von unbrauchbaren gelegt werden, und

c) die unbrauchbaren Schnittholzabschnitte sowie ggf. im Ganzen unbrauchbare Schnitthölzer vom Querförderer (1) weg ausgesondert werden.

2. Verfahren nach Anspruch 1, d a d u r c h gekennzeichnet, daß im Ganzen als unbrauchbar erkannte

0197353

Schnitthölzer (6) bereits vor Erreichen der Kapposition vom Querförderer (1) weg ausgesondert werden.

3. Verfahren nach Anspruch 1 oder 2, d a d u r c h  gekennzeichnet, daß gemäß den ermittelten Querschnittsformen mit der falschen Schnittseite auf dem Querförderer (1) aufliegende, brauchbare Schnitthölzer oder Schnittholzabschnitte um ihre Längsachse gewendet werden.

4. Verfahren nach Anspruch 3, d a d u r c h  gekennzeichnet, daß das Wenden der Schnitthölzer hinter der in Transportrichtung letzten Aussonderungsposition vorgenommen wird.

5. Vorrichtung zum Durchführen des Verfahrens nach Anspruch 1, mit einem Querförderer für die Schnitthölzer und mit im gegenseitigen Abstand in Brettlängsrichtung im Zuge des Querförderers angeordneten Kappsägen, gekennzeichnet durch

    a) eine Vielzahl von quer zur Transportrichtung der Schnitthölzer (6) im gegenseitigen Abstand über die maximale Schnittholzlänge verteilten Abtasteinrichtungen (4) zum kontinuierlichen Messen des Abstandes, den die beiderseitigen Oberflächen der einzelnen, auf dem Querförderer (1) aufliegenden Schnitthölzer (6) im Durchlauf an den Abtaststellen von einer maschinenfesten, zur Auflageebene des Querförderers (1) parallelen Bezugsebene aufweisen, und zum kontinuierlichen Liefern von dem gemessenen Abstand entsprechenden Meßsignalen,

    b) eine Auswerteinrichtung (7) zum Ermitteln der Querschnittsformen, die die Schnitthölzer (6) entlang der Abtastlinien aufweisen, aus den Meßsignalen der Abtasteinrichtung in Abhängigkeit
von einem Vorschubssignal,

c) eine im wesentlichen der Anzahl von Abtasteinrichtungen (4) entsprechende Anzahl von in Transportrichtung der Schnitthölzer (6) hinter den
Abtasteinrichtungen (4) im wesentlichen in deren
Flucht angeordneten, von der Auswerteinrichtung
(7) gesteuerten Kappvorrichtungen (8) zum selektiven Anbringen von Trennschnitten an den Schnitthölzern (6), und

d) in der Holztransportrichtung hinter den Kappvorrichtungen (8) angeordnete, von der Auswerteinrichtung (7) gesteuerte Weichen (9) zum selektiven
Aussondern von Schnitthölzern (6) oder neben
Trennschnitten befindlichen Schnittholzabschnitten
vom Querförderer (1) weg.

6. Vorrichtung nach Anspruch 5 gekennzeichnet durch weitere Weichen zwischen den Abtasteinrichtungen (4) und
den Kappvorrichtungen (8).

7. Vorrichtung nach Anspruch 5 oder 6, gekennzeichnet
durch eine in Holztransportrichtung hinter den Abtastvorrichtugnen (4) angeordnete Vorrichtung zum
selektiven Wenden der Schnitthölzer um deren Längsachse.

8. Vorrichtung nach Anspruch 7, d a d u r c h  gekennzeichnet, daß die Vorrichtung (11) zum Wenden der
Schnitthölzer hinter den in Holztransportrichtung
letzten Weichen (9) angeordnet ist.

Fig. 1

Fig. 2

| | **EINSCHLÄGIGE DOKUMENTE** | | EP 86103431.2 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
| A | DE - A1 - 2 610 912 (A & B CON-STRUCTORS AB)<br><br>* Fig. 1 *<br><br>-- | 5 | B 27 B 11/00 |
| A | US - A - 4 340 137 (FOSTER)<br><br>* Fig. 1 *<br><br>-- | 1,5 | |
| A | US - A - 4 120 333 (HELLGREN)<br><br>* Fig. 1 *<br><br>-- | 5 | |
| A | DE - A1 - 2 732 251 (KRUPP)<br><br>* Seite 16, Zeilen 5-10 *<br><br>-- | 5 | |
| A | DE - A1 - 3 150 375 (AHLSTRÖMFÖRE-TAGEN)<br><br>* Fig. 1 *<br><br>---- | 5,8 | **RECHERCHIERTE SACHGEBIETE (Int. Cl 4)**<br><br>B 27 B<br>B 65 G |

Der vorliegende Recherchenbericht wurde für alle Patentansprüche erstellt.

| Recherchenort | Abschlußdatum der Recherche | Prüfer |
|---|---|---|
| WIEN | 16-06-1986 | TRATTNER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03 82